(19)

Europäisches Patentamt
European Patent Office
Office européen des brevets

(11) **EP 2 336 548 B1**

(12) **EUROPEAN PATENT SPECIFICATION**

(45) Date of publication and mention
of the grant of the patent:
**25.07.2012 Bulletin 2012/30**

(51) Int Cl.:
*F02M 61/16* (2006.01)  *F16B 37/14* (2006.01)
*F02M 61/14* (2006.01)

(21) Application number: **09179699.5**

(22) Date of filing: **17.12.2009**

(54) **Fastening member**

Befestigungselement

Élément de fixation

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(43) Date of publication of application:
**22.06.2011 Bulletin 2011/25**

(73) Proprietor: **Delphi Technologies Holding S.à.r.l.
4940 Bascharage (LU)**

(72) Inventors:
• **Cooke, Michael
Gillingham, Kent ME7 1DR (GB)**

• **Guerrato, Diego
London, SE12 8RF (GB)**
• **Calonne, Jerome
Pembury, Kent TN2 4DZ (GB)**

(74) Representative: **Gregory, John David Charles
Delphi Diesel Systems
Patent Department
Courteney Road
Gillingham
Kent ME8 0RU (GB)**

(56) References cited:
**EP-A1- 1 854 993      EP-A1- 1 995 504
JP-A- 2007 205 461    RU-C1- 2 140 692
US-A- 4 764 340**

## Description

### Field of the invention

The present invention relates to a fastening member. In particular, but not exclusively, the invention relates to a fastening member suitable for use as a cap nut of a fuel injector. A fastening member of a pipe fitting is known from EP-A-1 995 504.

### Background to the invention

One type of fuel injector for use in internal combustion engines comprises an elongate, generally tubular or cylindrical nozzle holder body, and a nozzle. The nozzle houses a valve needle of the injector. The valve needle is moveable to control the flow of fuel through outlets in the nozzle. Movement of the valve needle is controlled by an actuator arrangement housed in the nozzle holder body. In use of the injector, the nozzle is positioned in communication with a combustion chamber of an internal combustion engine, and the injection of fuel from the injector into the combustion chamber through the outlets is controlled by operation of the actuator arrangement.

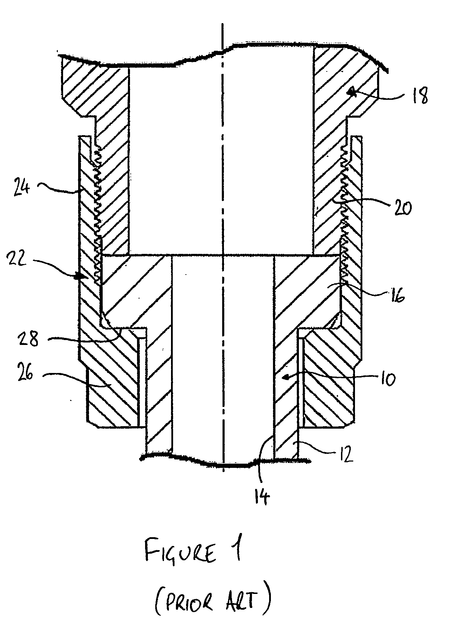

As shown in Figure 1 of the accompanying drawings, the nozzle 10 comprises an elongate portion 12 of relatively small outside diameter and having an axial bore 14 for receiving the valve needle (not shown), and a collar portion 16 of relatively large outside diameter. The outside diameter of the collar portion 16 approximately matches the outside diameter of an end region 20 of the nozzle holder body 18. The collar portion 16 of the nozzle 10 abuts the end region 20 of the nozzle holder body 18, and is held in position by a fastening member or cap nut 22.

The cap nut 22 comprises a generally tubular element having a first portion 24 with an inside diameter similar to the outside diameter of the end region 20 of the nozzle holder body 18 and the collar portion 16 of the nozzle 10, and a second portion 26 with an inside diameter similar to the outside diameter of the elongate portion 12 of the nozzle 10. The first portion 24 of the cap nut carries internal screw threads that mate with complementary external screw threads provided on the end region 20 of the nozzle holder body 18. The difference in the inside diameter of the first and second portions 24, 26 of the cap nut 22 provides a shoulder 28 of the cap nut 22, which abuts the collar portion 16 of the nozzle 10. In this way, when the cap nut 22 is screwed on to the end region 20 of the nozzle holder body 18, the collar portion 16 of the nozzle 10 is clamped against the nozzle holder body 18 by the cap nut 22.

In some cases, it may be desirable to provide an electrical connection between the nozzle holder body and the nozzle. For example, the present applicant's granted European Patent No. EP-B-1854993 describes an arrangement in which a pressure sensor is integrated into the cap nut of a fuel injector. The pressure sensor is arranged to measure the gas pressure within the combustion chamber associated with the injector, and is located on one side of the cap nut.

In such an arrangement, electrical connections between the injector and a control system of the engine are made at a connection point at an end of the nozzle holder body opposite the nozzle. Consequently, at least one electrical connection, typically a signal cable, must bridge from the connection point on the nozzle holder body to the pressure sensor in the cap nut. Due to space restrictions within the nozzle and the nozzle holder body, it is preferable for the signal cable to be provided on the outside of the body of the fuel injector.

It is desirable to design fuel injector components so that most or all of the assembly of a fuel injector can be automated. For this reason, it is preferred that the signal cable extends in a direction parallel to the common longitudinal axis of the nozzle holder body, the nozzle, and the cap nut.

It will be appreciated that, when the cap nut is screwed on to the nozzle holder body during assembly of an injector of the type described in EP-B-1854993, the angular position of the cap nut pressure sensor may not correspond to the angular position of the connection point on the nozzle holder body. In this event, the signal cable would not extend in the preferred axial direction. Furthermore, due to manufacturing tolerances and other factors, the angular spacing between the pressure sensor and the connection point may vary between injectors, leading to further difficulties in manufacturing the injector using an automated process.

It would therefore be desirable to provide an arrangement which overcomes or alleviates these problems. It is against this background that the present invention has been devised.

### Summary of the invention

In a first aspect, the present invention provides a fastening member for fastening a first component to a second component in an end-to-end configuration along a common axis. The fastening member comprises a first portion having a threaded region for engagement with a corresponding threaded region of the first component, a second portion for applying a retaining force to the second component to hold the first and second components in sealing engagement, and a deformable portion intermediate the first and second portions.

The deformable portion allows relative movement of the first and second portions of the fastening member. Therefore, the fastening member of the invention is useful in applications where it is necessary to bring a location, such as a connection point for an electrical signal cable, on the fastening member into angular alignment with a location on the first or second component. In use, the fastening member can be screwed on to the first component so that a retaining or clamping force is applied to keep the first and second components in contact, and then the fastening member can be turned further to bring a location on the fastening member into angular alignment with a location on the first or second component. The deformable portion deforms when necessary to allow the first portion to move along the threads of the first component, facilitating the further turning movement of the fastening member.

Accordingly, the deformable portion is plastically deformable so as to allow relative movement of the first and second portions in use of the fastening member, such that a location on the fastening member can be brought into angular alignment with a location on the first or second component upon turning movement of the fastening member. The location on the fastening member may comprise a connection point.

In one embodiment of the invention, the relative movement of the first and second portions is substantially in a direction parallel to the axis. In use of the fastening member, an initial turning movement of the second portion may cause turning movement of the first portion without deformation of the deformable portion, and a subsequent turning movement of the second portion may cause turning movement of the first portion and relative movement of the first and second portions substantially in a direction parallel to the axis.

The fastening member may comprise an internal shoulder where the second portion meets the deformable portion. The shoulder may be arranged to abut a surface of the second component in use of the fastening member.

The deformable portion may comprise a thin-walled region of the fastening member. In one arrangement, the deformable portion is spaced from the threaded region of the first component in use of the fastening member. This helps to prevent damage to the deformable portion that could otherwise arise if the deformable portion were to come into contact with the threads of the first component. To this end, the deformable portion may comprise a frusto-conical region.

In one embodiment, at least a part of the deformable portion has a cross-sectional area $A_W$ given by:

$$A_w \geq \frac{N_{min}}{\sigma_y}$$

where $N_{min}$ is the minimum retaining force required to form a seal between the first component and the second component, and where $\sigma_y$ is the yield stress of the material from which the deformable portion is made.

The fastening member is particularly suitable for use in a fuel injector of the type having a cap nut including an integrated pressure sensor. Accordingly, from a second aspect, the present invention resides in a cap nut for a fuel injector, comprising a fastening member according to the first aspect of the invention. The cap nut may be arranged to receive an electronic device, for example a cylinder pressure sensor. The device is received in a wall or periphery of the cap nut, laterally spaced from the axis of the cap nut. The device may be received in the second portion of the cap nut. The presence of the deformable portion advantageously allows the angular position of the electronic device to be aligned with a connection point on the first component.

The invention also extends, in a third aspect, to a fuel injector comprising a cap nut according to the second aspect of the invention, a nozzle body holder comprising the first component, and a nozzle comprising the second component. Said another way, the first component of the first aspect of the invention may be a nozzle holder body of a fuel injector, the second component of the first aspect of the invention may be a nozzle of the fuel injector, and the fastening member of the first aspect of the invention may be a cap nut of the fuel injector. The nozzle holder body may comprise a connection point for a signal cable.

A fourth aspect of the invention resides in a method for assembling an apparatus comprising a first body having a first lateral alignment point, a second body, and a generally tubular fastening member having a second lateral alignment point. The first body, the second body and the fastening member are arranged along a common axis, and the fastening member is arranged to retain the second body against an end of the first body. The method comprises applying a predetermined torque to the fastening member sufficient to cause sealing between the second body and the first body and, after applying the predetermined torque, turning the fastening member so as to bring the second alignment point into angular alignment with the first alignment point.

Advantageously, according to the fourth aspect of the invention, turning the fastening member after applying the predetermined torque comprises plastically deforming a portion of the fastening member in an axial direction. Turning the fastening member after applying the predetermined torque preferably comprises turning the fastening member through an angle of not more than 360°.

The first and second alignment points may comprise electrical connection points, in which case the method may further comprise fitting an axial electrical cable to the apparatus between the electrical connection points.

In one embodiment of the fourth aspect of the invention, there is provided a method for assembling a fuel injector comprising a nozzle holder body having a first lateral electrical connection point, a nozzle, and a cap nut having a second lateral electrical connection point, wherein the nozzle holder body, the nozzle and the cap nut are arranged along a common axis, and wherein the cap nut is arranged to retain the nozzle against an end of the nozzle holder body. The method comprises applying a predetermined torque to the cap nut sufficient to cause sealing between the nozzle and the nozzle holder body and, after applying the predetermined torque, turning the cap nut so as to bring the second connection point into angular alignment with the first electrical connection point.

The method of the fourth aspect of the invention may be carried out using a fastening member according to the first aspect of the invention, or the fastening member may comprise a cap nut according to the second aspect of the invention. The method of the fourth aspect may also be used to assemble a fuel injector according to the third aspect of the invention.

Preferred or optional features of each aspect of the invention may be used, alone or in appropriate combination, in the other aspects of the invention also.

**Brief description of the drawings**

Figure 1 of the accompanying drawings, which has been referred to above, is a cross-sectional view of part of a fuel injector having a cap nut of a known type.

Embodiments of the present invention will now be described, by way of example only, with reference to the remaining drawings in which like reference numerals are used for like parts and in which:

> Figure 2 is a cross-sectional view of part of a fuel injector having a cap nut according to one embodiment of the invention;

> Figure 3 is a perspective view of the cap nut shown in Figure 2, in isolation; and

> Figure 4 is a schematic stress-strain curve to illustrate the behaviour of the cap nut of Figures 2 and 3.

**Detailed description of preferred embodiments of the invention**

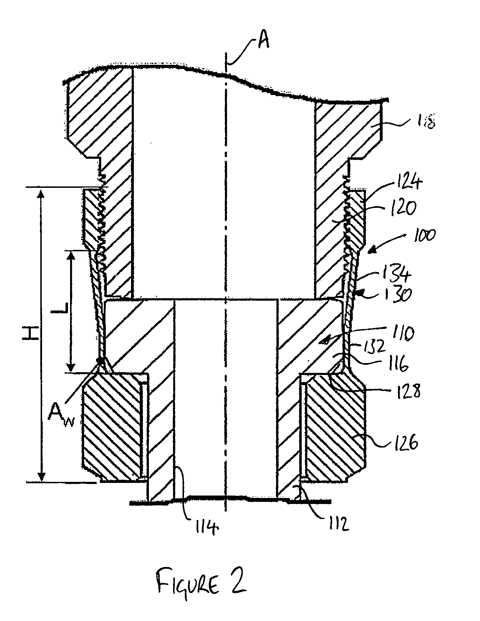

Figure 2 shows, in cross section, a fastening member or cap nut 100 according to one embodiment of the invention. The cap nut 100 is shown in position in an assembled fuel injector, in which a nozzle holder body 118 and a nozzle 110 of the fuel injector are connected or fastened to one another by means of the cap nut 100.

The nozzle 110 comprises an elongate portion 112 of relatively small outside diameter and having an axial bore 114 for receiving a valve needle (not shown), and a collar portion 116 of relatively large outside diameter. The outside diameter of the collar portion 116 approximately matches the outside diameter of an end region 120 of the nozzle holder body 118. The nozzle holder body 118 is a generally cylindrical element that houses an actuator (not shown) for the valve needle. The nozzle 110 and the nozzle holder body 118 are arranged coaxially along a common axis A, and the collar portion 116 of the nozzle 110 abuts the end region 120 of the nozzle holder body 118.

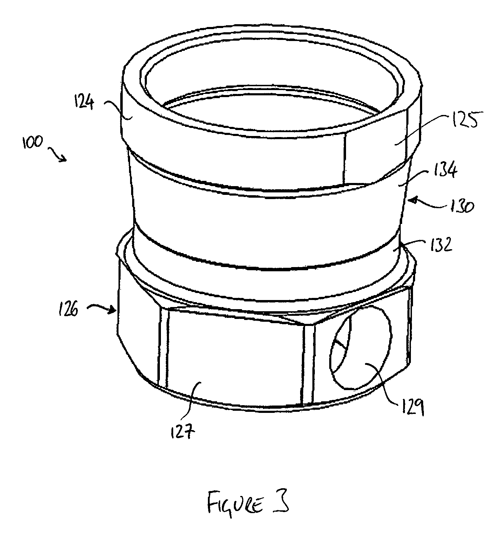

Referring additionally to Figure 3, the cap nut 100 comprises a generally tubular element having a first portion 124 with an inside diameter similar to the outside diameter of the end region 120 of the nozzle holder body 118, and a second portion 126 with an inside diameter slightly larger than the outside diameter of the elongate portion 112 of the nozzle 102. The first portion 124 of the cap nut carries internal screw threads that mate with complementary external screw threads provided on the end region 120 of the nozzle holder body 118.

The cap nut 100 also comprises a deformable portion 130 intermediate the first and second portions 124, 126. The deformable portion 130 is generally tubular, and comprises a cylindrical region 132 connected to a frusto-conical region 134 having a relatively small cone angle. The cylindrical region 132 is adjacent to and connected with the second portion 126 of the cap nut 100, and the frusto-conical region 134 is adjacent to and connected with the first portion 124 of the cap nut. In this way, the deformable portion 130 connects the first portion 124 to the second portion 126. As can be appreciated from Figure 2, the deformable portion 130 is relatively thin in cross-section, compared to the first and second portions 124.

The minimum inside diameter of the deformable portion 130 is located at the cylindrical region 132. This minimum inside diameter is approximately equal to the outside diameter of the collar portion 116 of the nozzle 110.

The inside diameter of the frusto-conical region 134 increases moving from the cylindrical region 132 to the first portion 124 of the cap nut 100. The frusto-conical region 134 meets the first portion 124 approximately midway between the inner and outer faces of the first portion 124, so that the end of the frusto-conical region 134 nearest the first portion 124 stands off from the external threads on the lower portion 120 of the nozzle holder body 118. In this way, the deformable portion 130 of the cap nut 100 does not foul the threads of the nozzle holder body 118, so as to avoid damage to the threads or to the material of the deformable portion 130. Furthermore, if the deformable portion 130 were to be in contact with the threads, the threads may act as local stress-raisers that could cause failure of the deformable portion 130.

The difference in the inside diameter of the deformable portion 130 and the second portion 126 of the cap nut 100 provides a shoulder 128 which abuts the collar portion 116 of the nozzle 110. In this way, when the cap nut 100 is screwed on to the end region 120 of the nozzle holder body 118, the collar portion 116 of the nozzle 110 is clamped against the nozzle holder body 118 by the cap nut 100.

The second portion 126 carries flats (127 in Figure 3) arranged in a hexagonal pattern, to allow the cap nut 100 to be screwed on to the nozzle holder body 118 during assembly of the fuel injector. During assembly, a suitable tool is engaged with the flats on the second portion 126, and a torque is applied to the cap nut 100 via the tool so as to cause rotation of the cap nut 100.

The second portion 126 also comprises a recess (129 in Figure 3, not shown in Figure 2), for housing a device such as a pressure sensor (not shown). It is necessary to connect the device accommodated in the recess 129 to a corresponding connection point (not shown) provided on the nozzle holder body 118 using a signal cable (not shown), once the components of the injector have been assembled. To allow the signal cable to be fitted to the injector using an automated process, it is necessary that the recess 129 and the connection point are in angular alignment once the cap nut 100 is in place. Said another way, the connection point and the recess 129 should lie in a common direction parallel to the axis A of the injector.

The deformable portion 130 of the cap nut 100 is designed so that, during assembly of the injector, the deformable portion 130 can undergo a plastic strain in a direction parallel to the axis A.

During assembly of the injector, the elongate portion 112 of the nozzle 110 is inserted into the second portion 126 of the cap nut 100, so that the collar portion 116 of the nozzle 110 is received by the first portion 124 and deformable portion 130 of the cap nut 110. The threads of the first portion 124 are engaged with the threads of the end region 120 of the nozzle holder body 118, and the cap nut 100 is rotated using a suitable tool. As it rotates, the cap nut 100 moves in an axial direction towards the nozzle holder body.

As noted above, the shoulder 128 of the cap nut 100 abuts the collar portion 116 of the nozzle 110, and the collar portion 116 in turn abuts the end region 120 of the nozzle holder body 118. In this way, the cap nut 100 applies an axially-directed clamping force to the nozzle 110 and the nozzle holder body 118 to retain the nozzle 110 in abutment with the nozzle holder body 118. The clamping force is sufficient to form a fluid-tight seal between the nozzle 110 and the nozzle holder body 118.

As will be appreciated, when the clamping force is applied, a corresponding axially-directed tensile force is borne by the cap nut 100, and in particular by the deformable portion 130 of the cap nut 100. When the resulting tensile stress in the cap nut 100 exceeds the yield stress of the material of the cap nut 100, plastic deformation of the deformable portion 130 will occur. As will be explained in greater detail below, the cap nut 100 is arranged so that the deformable portion 130 undergoes plastic deformation only when the clamping force reaches or exceeds a minimum level. This minimum clamping force is sufficient to hold the nozzle 110 and the nozzle holder body 118 in sealing engagement.

Tightening of the cap nut 100 therefore takes place in two consecutive stages. During the first stage, rotation of the cap nut 100 occurs without deformation of the deformable portion 130. The cap nut 100 is turned to increase the clamping force to the minimum level. Since the clamping force achieved is related to the torque applied to the cap nut 100 by the tool, the desired minimum clamping force can be reached by tightening the cap nut 100 to an appropriate minimum torque.

It will be appreciated that, once the minimum torque is reached, the angular orientation of the recess 129 of the cap nut 100 may not correspond to the angular orientation of the connection point on the nozzle holder body 118. In other words, the recess 129 and the connection point are angularly misaligned.

In the second stage of tightening, the cap nut 100 is turned further, through an angle corresponding to the angular misalignment of the recess and the connection point. This further turning of the cap nut 100 causes the tensile stress within the deformable portion 130 to increase beyond the yield stress of the material of the deformable portion 130. Consequently, the deformable portion 130 plastically deforms in such a way that the first portion 124 can move relative to the second portion 126 in an axial direction, allowing the first portion 124 to travel along the treaded end region 120 of the nozzle holder body 118 without significantly increasing the force that acts to clamp the nozzle 110 to the nozzle holder body 118 or the corresponding tensile stress in the cap nut 100.

In this way, the recess 129 and the connection point of the nozzle holder body 118 can be suitably aligned during the second stage of tightening. A signal cable (not shown) can then be attached to the injector to connect the connection point of the nozzle holder body 118 and the device in the recess 129. As shown in Figure 3, a flat 125 is provided on the periphery of the first portion 124 to accommodate the thickness of the signal cable.

By way of comparison, in conventional cap nut such as that shown in Figure 1, there is no deformable portion. In such a case, once the cap nut is tightened to a suitable torque, any angular misalignment between respective connection points on the cap nut and the nozzle holder body cannot be corrected by further turning of the cap nut. If this were attempted, the torque required to turn the cap nut might exceed the capacity of the tool, the cap nut might fail due to excessive tensile stress, or the nozzle and/or the nozzle holder body might become damaged due to an excessive clamping force.

It is conceivable that, after the first stage of tightening, the respective connection points on the cap nut and the nozzle holder body may already be sufficiently well aligned. In this situation, the cap nut 100 need not be turned further (i.e. the second stage of tightening can be omitted). Alternatively, it may be preferable to turn the cap nut 100 through a further angle in the second stage of tightening, to cause deformation of the deformable portion 130 and to ensure consistency of the alignment.

Referring back to Figure 2, the shape and configuration of the cap nut 100 may have any suitable form, provided that the deformable portion 130 yields only after a sufficient clamping force is established to retain the nozzle 110 against the nozzle holder body 118, and provided that the cap nut 100 does not fail during assembly or use of the injector.

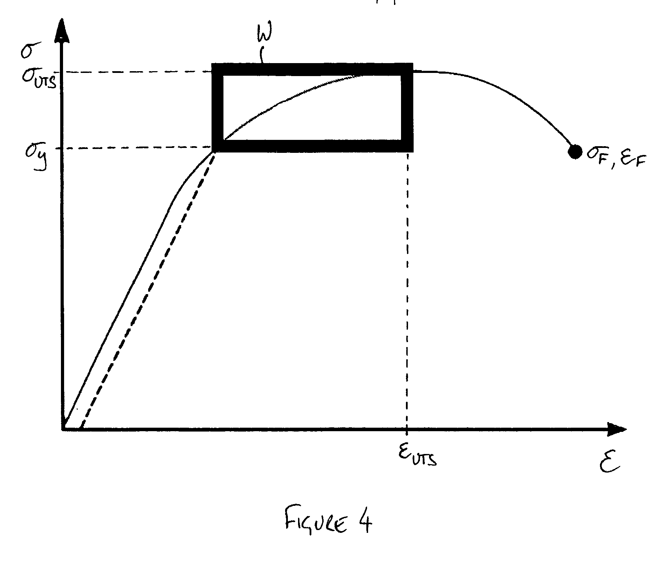

The material of the cap nut 100 is typically a steel alloy with a relatively high Young's modulus (modulus of elasticity or stiffness). Figure 4 illustrates, schematically, the tensile engineering stress-strain behaviour of the material of the cap nut 100. Initially, as the tensile stress (vertical axis, denoted $\sigma$) increases, the material undergoes a linear elastic strain (horizontal axis, denoted $\varepsilon$). Once the tensile stress exceeds the yield stress $\sigma_y$ of the material, plastic deformation occurs and the strain or extension of the material increases by a relatively large amount for a small increase in applied stress.

Continued plastic deformation results in thinning of the material, until, beyond a certain strain, necking occurs. During necking, the stress required to cause further strain of the material decreases. The maximum tensile stress that can be borne by the material, which is available just before the onset of necking, is known as the ultimate tensile stress $\sigma_{UTS}$. The strain at this point is denoted $\varepsilon_{UTS}$.

Further plastic deformation eventually results in failure of the material, for example by fracture or rupture. This occurs at the failure stress $\sigma_F$ and failure strain $\varepsilon_F$.

In the context of the present invention, it is desirable that necking of the material during deformation of the deformable portion 130 is avoided. If necking were to occur, the tensile stress in the deformable portion 130 may cause deformation to continue to the point of fracture. However, to ensure that a minimum clamping force is applied between the nozzle holder body 118 and the nozzle 110, some plastic deformation of the deformable portion 130 is always desirable. Consequently, the cap nut 100 is designed such that, at the end of the second stage of tightening, the stress carried by the deformable portion 130 is greater than the yield stress $\sigma_y$ but less than the ultimate tensile stress $\sigma_{UTS}$. This region is highlighted by the box denoted W in Figure 4.

In view of this material behaviour, the dimensions of the deformable portion 130 may be chosen according to the following criteria. If the minimum axial clamping force (i.e. the clamping force sufficient to create a seal between the nozzle 110 and the nozzle holder body 118 is $N_{min}$, and $\sigma_y$ is the yield stress of the material of the cap nut 100, the cross-sectional area $A_W$ of the wall of the deformable portion 130 at its thinnest point (as indicated in Figure 2) is calculated according to the formula:

$$A_w \geq \frac{N_{min}}{\sigma_y} \ .$$

Accordingly, the deformable portion 130 will plastically deform when the clamping force meets or exceeds the minimum required value.

The minimum cross-sectional area $A_W$ of the wall of the deformable portion 130 depends on the thickness $t$ of the wall and on the diameter D of the deformable portion 130. To ensure that the deformable portion 130 undergoes predominantly axial deformation and to minimise twisting or shear deformation of the deformable portion 130, it is desirable that D is much greater than $t$. For example, D may be greater than or equal to $20t$.

The maximum required axial displacement of the first portion 124 with respect to the second portion 126 is equal to the pitch p of the threads of the first portion 124. An axial displacement equal to $p$ occurs during one full rotation of the cap nut 100 during the second stage of tightening, when the deformable portion 130 is deforming plastically.

To avoid necking, the length $L$ of the deformable portion 130 should be sufficiently long so that the maximum axial strain in the deformable portion 130 does not exceed $\varepsilon$UTS-Therefore the length $L$ should satisfy:

$$\frac{p}{L} < a\varepsilon_{UTS} \, ,$$

where a is a safety factor less than 1 to ensure that the material does not neck or rupture. For example, a may be in the range 0.6 to 0.8.

The maximum length L of the deformable portion 130 is, however, constrained by other design constraints of the cap nut 100. Within the overall length H of the cap nut 100, the threaded first portion 124, the deformable portion 130 with length L, and the second portion 126 must be accommodated.

The first portion 124 must be long enough to provide space for a sufficient number of internal threads to engage with the external threads on the end region 120 of the nozzle holder body 118. If too few threads are provided, there is a risk of rupture or failure of the threaded joint between the cap nut 100 and the nozzle holder body 118.

The second portion 126 must be long enough to allow large enough flats 127 to be provided for engagement of the cap nut fitting tool during assembly of the injector, and to provide sufficient space for the recess 129.

Consequently, the choice of the length L of the deformable portion 130 is a compromise between providing a sufficient length to allow plastic deformation of the deformable portion 130 without necking or failure of the material, and avoiding failure of the threaded joint and difficulties during assembly of the injector.

In some embodiments of the invention, the diameter D of the deformable portion 130 is between approximately 12 mm and approximately 17 mm, the thickness $t$ of the of the wall of the deformable portion 130 is between approximately 0.3 mm and approximately 2 mm, and the length L of the deformable portion 130 is between approximately 10 mm and approximately 40 mm. It will be appreciated, however, that dimensions outside these ranges could also be used if appropriate.

Although it is preferable that the deformable portion 130 does not deform by necking, it will be understood that some degree of necking may be acceptable provided that the clamping force applied by the cap nut 100 remains at a sufficient level.

It will be appreciated that the design of the cap nut 100 will be influenced by the choice of material, and that different materials will be appropriate for different applications and cap nut designs. In most cases, a soft engineering steel having good ductility is appropriate. However, the yield stress of the material must be sufficient so that the cap nut 100 is strong enough to withstand the forces that act on it in use. If, in a particular case, the design of the cap nut 100 places constraints on the dimensions of the deformable portion 130, then a particularly ductile alloy could be chosen. To obtain the desired ductility, the cap nut 100 may be heat-treated after manufacture of the cap nut 100.

Typical engineering steels undergo strain-hardening during plastic deformation, as illustrated by the positive gradient of the stress-strain curve of Figure 4 in the working region W. It is desirable, however, that a material with a relatively modest tendency for strain-hardening is chosen, so as to avoid an excessive clamping force being applied when the cap nut 100 is turned to align the connection point and the recess 129.

Although the present invention is particularly useful in aligning a location on a cap nut with a location on the nozzle holder body of a fuel injector, it will be understood that the fastening member of the invention can be used in other applications. The present invention would find application in any situation in which it is desirable to fasten two components together in an end-to-end manner along a common axis by applying an axially-directed clamping force of an appropriate magnitude. In such a case, the invention offers the advantage of being able to set the fastening member to a particular rotational or angular orientation with respect to one or both of the components without significantly increasing the clamping force.

Examples of other applications in which the present invention could be used include the alignment of a hydraulic port on a fastening member with an inlet or outlet connection on another component, and the alignment of locating lugs, clearance slots and so on when assembling adjacent components.

As will be appreciated by a person skilled in the art, several modifications and variations of the fastening member could also be made without departing from the scope of the invention as defined in the appended claims.

**Claims**

1. A fastening member (100) for fastening a first component (118) to a second component (110) in an end-to-end configuration along a common axis (A), the fastening member (100) comprising:

a first portion (124) having a threaded region for engagement with a corresponding threaded region (120) of the first component (118); a second portion (126) for applying a retaining force to the second component (110) to hold the first and second components (118, 110) in sealing engagement; and a deformable portion (130) intermediate the first and second portions (124, 126); wherein the deformable portion (130) is plastically deformable so as to allow relative movement of the first and second portions (124, 126) in use of the fastening member (100), such that a location (129) on the fastening member can be brought into angular alignment with a location on the first or second component (118, 110) upon turning movement of the fastening member.

2. The fastening member of Claim 1, wherein the location on the fastening member (100) comprises a connection point (129).

3. The fastening member of Claim 1 or Claim 2, wherein the relative movement of the first and second portions (124, 126) is substantially in a direction parallel to the axis (A).

4. The fastening member of Claim 3, arranged so that, in use of the fastening member (100), an initial turning movement of the second portion (126) causes turning movement of the first portion (124) without deformation of the deformable portion (130), and a subsequent turning movement of the second portion (126) causes turning movement of the first portion (124) and relative movement of the first and second portions (124, 126) substantially in a direction parallel to the axis (A).

5. The fastening member of any preceding Claim, comprising an internal shoulder (128) where the second portion (124) meets the deformable portion (130), the shoulder (128) being arranged to abut a surface of the second component (110) in use of the fastening member (100).

6. The fastening member of any preceding Claim, wherein the deformable portion (130) comprises a thin-walled region of the fastening member (100).

7. The fastening member of any preceding Claim, wherein the deformable portion (130) is spaced from the threaded region (120) of the first component (118) in use of the fastening member (110).

8. The fastening member of Claim 7, wherein the deformable portion (130) comprises a frusto-conical region (134).

**9.** The fastening member of any preceding Claim, wherein at least a part of the deformable portion (130) has a cross-sectional area $A_w$ given by:

$$A_w \geq \frac{N_{min}}{\sigma_y}$$

where $N_{min}$ is the minimum retaining force required to form a seal between the first component (110) and the second component (118); and where $\sigma_y$ is the yield stress of the material from which the deformable portion (130) is made.

**10.** A cap nut for a fuel injector, comprising a fastening member (100) according to any preceding Claim.

**11.** A fuel injector, comprising a cap nut (100) according to Claim 10, a nozzle body holder (118) comprising the first component, and a nozzle (110) comprising the second component.

**12.** A method for assembling an apparatus comprising a first body (118) having a first lateral alignment point, a second body (110), and a generally tubular fastening member (100) having a second lateral alignment point (129), wherein the first body (118), the second body (110) and the fastening member (100) are arranged along a common axis (A), and wherein the fastening member (100) is arranged to retain the second body (110) against an end (120) of the first body (118); the method comprising:

applying a predetermined torque to the fastening member (100) sufficient to cause sealing between the second body (110) and the first body (118); and
after applying the predetermined torque, turning the fastening member (100) so as to bring the second alignment point (129) into angular alignment with the first alignment point;
wherein turning the fastening member (100) after applying the predetermined torque comprises plastically deforming a portion (130) of the fastening member in an axial direction.

**13.** The method of Claim 12, wherein turning the fastening member (100) after applying the predetermined torque comprises turning the fastening member (100) through an angle of not more than 360°.

**14.** The method of any Claim 12 or Claim 13, wherein the first and second alignment points comprise electrical connection points, and wherein the method further comprises fitting an axial electrical cable to the apparatus between the electrical connection points.

**Patentansprüche**

**1.** Befestigungselement (100) zum Befestigen eines ersten Bauteils (118) an einem zweiten Bauteil (110) in einer Stoßkonfiguration entlang einer gemeinsamen Achse (A), wobei das Befestigungselement (100) Folgendes aufweist:

einen ersten Teil (124), der eine mit Gewinde versehene Region für den Eingriff mit einer entsprechenden mit Gewinde versehenen Region (120) des ersten Bauteils (118) hat,
einen zweiten Teil (126) zum Ausüben einer Haltekraft auf das zweite Bauteil (110), um das erste und das zweite Bauteil (118, 110) in dichtendem Eingriff zu halten, und
einen verformbaren Teil (130) zwischen dem ersten und dem zweiten Teil (124, 126),
wobei der verformbare Teil (130) plastisch verformbar ist, um im Gebrauch des Befestigungselements (100) die relative Bewegung des ersten und des zweiten Teils (124, 126) zuzulassen, so dass eine Stelle (129) an dem Befestigungselement bei einer Drehbewegung des Befestigungselements mit einer Stelle an dem ersten oder dem zweiten Teil (118, 110) in Winkelausrichtung gebracht werden kann.

**2.** Befestigungselement nach Anspruch 1, wobei die Stelle an dem Befestigungselement (100) einen Anschlusspunkt (129) umfasst.

**3.** Befestigungselement nach Anspruch 1 oder Anspruch 2, wobei die relative Bewegung des ersten und des zweiten Teils (124, 126) im Wesentlichen in einer zur Achse (A) parallelen Richtung ist.

**4.** Befestigungselement nach Anspruch 3, das so angeordnet ist, dass bei Gebrauch des Befestigungselements (100) eine anfängliche Drehbewegung des zweiten Teils (126) eine Drehbewegung des ersten Teils (124) ohne Verformung des verformbaren Teils (130) verursacht und eine nachfolgende Drehbewegung des zweiten Teils (126) die Drehbewegung des ersten Teils (124) und die relative Bewegung des ersten und des zweiten Teils (124, 126) im Wesentlichen in einer zur Achse (A) parallelen Richtung verursacht.

**5.** Befestigungselement nach einem der vorhergehenden Ansprüche, das eine Innenschulter (128) aufweist, an der der zweite Teil (124) auf den verformbaren Teil (130) trifft, wobei die Schulter (128) so angeordnet ist, dass sie im Gebrauch des Befestigungselements (100) an einer Oberfläche des zweiten Bauteils (110) in Anlage ist.

**6.** Befestigungselement nach einem der vorhergehenden Ansprüche, wobei der verformbare Teil (130) eine dünnwandige Region des Befestigungselements (100) umfasst.

7. Befestigungselement nach einem der vorhergehenden Ansprüche, wobei der verformbare Teil (130) im Gebrauch des Befestigungselements (110) von der mit Gewinde versehenen Region (120) des ersten Bauteils (118) beabstandet ist.

8. Befestigungselement nach Anspruch 7, wobei der verformbare Teil (130) eine kegelstumpfförmige Region (134) aufweist.

9. Befestigungselement nach einem der vorhergehenden Ansprüche, wobei wenigstens ein Teil des verformbaren Teils (130) eine Querschnittsfläche $A_w$ hat, bestimmt durch:

$$A_w \geq \frac{N_{\min}}{\sigma_y}$$

wobei $N_{\min}$ die Mindesthaltekraft ist, die zum Bilden einer Dichtung zwischen dem ersten Bauteil (110) und dem zweiten Bauteil (118) erforderlich ist, und wobei $\sigma_y$ die Fließspannung des Materials ist, aus dem der verformbare Teil (130) hergestellt ist.

10. Kopfmutter für eine Kraftstoffeinspritzvorrichtung, die ein Befestigungselement (100) nach einem der vorhergehenden Ansprüche umfasst.

11. Kraftstoffeinspritzvorrichtung, die eine Kopfmutter (100) nach Anspruch 10, einen Düsenkörperhalter (118), der das erste Bauteil umfasst, und eine Düse (110), die das zweite Bauteil umfasst, aufweist.

12. Verfahren zum Zusammenbauen einer Vorrichtung, die einen ersten Körper (118) mit einem ersten seitlichen Ausrichtungspunkt, einen zweiten Körper (110) und ein im Allgemeinen rohrförmiges Befestigungselement (100) mit einem zweiten seitlichen Ausrichtungspunkt (129) aufweist, wobei der erste Körper (118), der zweite Körper (110) und das Befestigungselement (100) entlang einer gemeinsamen Achse (A) angeordnet sind und wobei das Befestigungselement (100) zum Halten des zweiten Körpers (110) an ein Ende (120) des ersten Körpers (118) angeordnet ist, wobei das Verfahren Folgendes umfasst:

Ausüben eines vorbestimmten Drehmoments auf das Befestigungselement (100), das ausreicht, um das Dichten zwischen dem zweiten Körper (110) und dem ersten Körper (118) zu verursachen, und

Drehen des Befestigungselements (100) nach dem Ausüben des vorbestimmten Drehmoments, um den zweiten Ausrichtungspunkt (129) in Winkelausrichtung auf den ersten Ausrichtungspunkt zu bringen, wobei das Drehen des Befestigungselements (100) nach dem Ausüben des vorbestimmten Drehmoments das plastische Verformen eines Teils (130) des Befestigungselements in einer axialen Richtung aufweist.

13. Verfahren nach Anspruch 12, wobei das Drehen des Befestigungselements (100) nach dem Ausüben des vorbestimmten Drehmoments das Drehen des Befestigungselements (100) um einen Winkel von höchstens 360° aufweist.

14. Verfahren nach Anspruch 12 oder Anspruch 13, wobei der erste und der zweite Ausrichtungspunkt elektrische Anschlusspunkte aufweisen und wobei das Verfahren ferner das Anbringen eines axialen elektrischen Kabels zwischen den elektrischen Anschlusspunkten an der Vorrichtung aufweist.

**Revendications**

1. Élément de fixation (100) pour fixer un premier composant (118) à un second composant (110) dans une configuration bout-à-bout le long d'un axe commun (A), l'élément de fixation (100) comprenant :

une première portion (124) ayant une région à pas de vis en vue d'un engagement avec une région à pas de vis correspondante (120) du premier composant (118) ; une seconde portion (126) pour appliquer une force de retenue au second composant (110) et tenir le premier et le second composant (118, 110) en engagement étanche ; et une portion déformable (130) intermédiaire entre la première et la seconde portion (124, 126) ; dans lequel la portion déformable (130) est plastiquement déformable de manière à permettre un mouvement relatif de la première et de la seconde portion (124, 126) en utilisation de l'élément de fixation (100), de sorte qu'un emplacement (129) sur l'élément de fixation peut être amené en alignement angulaire avec un emplacement du premier ou du second composant (118, 110) lors d'un mouvement tournant de l'élément de fixation.

2. Élément de fixation selon la revendication 1, dans lequel l'emplacement sur l'élément de fixation (100) comprend un point de connexion (129).

3. Élément de fixation selon la revendication 1 ou 2, dans lequel le mouvement relatif de la première et de la seconde portion (124, 126) est sensiblement dans une direction parallèle à l'axe (A).

4. Élément de fixation selon la revendication 3, agencé de telle façon que, en utilisation de l'élément de fixation (100), un mouvement tournant initial de la seconde portion (126) entraîne un mouvement tournant de la première portion (124) sans déformation de la portion déformable (130), et un mouvement tournant successif de la seconde portion (126) entraîne un mouvement tournant de la première portion (124) et un mouvement relatif de la première et de la seconde portion (124, 126) sensiblement dans une direction parallèle à l'axe (A).

5. Élément de fixation selon l'une quelconque des revendications précédentes, comprenant un épaulement interne (128) où la seconde portion (124) rencontre la portion déformable (130), l'épaulement (128) étant agencé pour venir buter contre une surface du second composant (110) en utilisation de l'élément de fixation (100).

6. Élément de fixation selon l'une quelconque des revendications précédentes, dans lequel la portion déformable (130) comprend une région à paroi mince de l'élément de fixation (100).

7. Élément de fixation selon l'une quelconque des revendications précédentes, dans lequel la portion déformable (130) est espacée de la région à pas de vis (120) du premier composant (118) en utilisation de l'élément de fixation (110).

8. Élément de fixation selon la revendication 7, dans lequel la portion déformable (130) comprend une région tronconique (134).

9. Élément de fixation selon l'une quelconque des revendications précédentes, dans lequel au moins une partie de la portion déformable (130) possède une aire de section transversale Aw donnée par :

$$ Aw \geq (Nmin/\sigma y) $$

dans laquelle Nmin est la force de retenue minimum requise pour former une étanchéité entre le premier composant (110) et le second composant (118) ; et dans laquelle σy est la contrainte de rupture du matériau duquel est réalisée la portion déformable (130).

10. Écrou-capuchon pour un injecteur de carburant, comprenant un élément de fixation (100) selon l'une quelconque des revendications précédentes.

11. Injecteur de carburant, comprenant un écrou-capuchon (100) selon la revendication 10, un support de corps de buse (118) constituant le premier composant, et une buse (110) constituant le second composant.

12. Procédé pour assembler un appareil comprenant un premier corps (118) ayant un premier point d'alignement latéral, un second corps (110), et un élément de fixation généralement tubulaire (100) ayant un second point d'alignement latéral (129), dans lequel le premier corps (118), le second corps (110) et l'élément de fixation (100) sont agencés le long d'un axe commun (A), et dans lequel l'élément de fixation (100) est agencé pour retenir le second corps (110) contre une extrémité (120) du premier corps (118) ; le procédé comprenant les étapes consistant à :

appliquer un couple prédéterminé à l'élément de fixation (100) suffisant pour entraîner une étanchéité entre le second corps (110) et le premier corps (118) ; et
après avoir appliqué le couple prédéterminé, faire tourner l'élément de fixation (100) de manière à amener le second point d'alignement (129) jusqu'en alignement angulaire avec le premier point d'alignement ;
dans lequel l'étape consistant à faire tourner l'élément de fixation (100) après avoir appliqué le couple prédéterminé comprend de déformer plastiquement une portion (130) de l'élément de fixation dans une direction axiale.

13. Procédé selon la revendication 12, dans lequel l'étape consistant à faire tourner l'élément de fixation (100) après avoir appliqué le couple prédéterminé comprend de faire tourner l'élément de fixation (100) sur un angle qui ne dépasse pas 360°.

14. Procédé selon l'une ou l'autre des revendications 12 et 13, dans lequel le premier et le second point d'alignement comprennent des points de connexion électrique, et dans lequel le procédé comprend en outre l'assemblage d'un câble électrique axial sur l'appareil entre les points de connexion électrique.

FIGURE 1
(PRIOR ART)

FIGURE 2

FIGURE 3

FIGURE 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1995504 A

- EP 1854993 B